# EUROPÄISCHE PATENTSCHRIFT

(11) **EP 0 872 738 B1**
(45) Veröffentlichungstag und Bekanntmachung des Hinweises auf die Patenterteilung: **02.07.2003**
(21) Anmeldenummer: 98106432.2
(22) Anmeldetag: 08.04.1998
(51) Int. Cl.: G01P 3/48

(54) **Verfahren zur Ermittlung der Drehzahl einer Brennkraftmaschine**
Method for determination of the rotational frequency of an internal combustion engine
Procédé pour la détermination de la fréquence de rotation d'un moteur à combustion interne

(30) Priorität: 15.04.1997 DE 19715643
(43) Veröffentlichungstag der Anmeldung: 21.10.1998
(73) Patentinhaber: ROBERT BOSCH GMBH, 70442 Stuttgart (DE)
(72) Erfinder: Anlauf, Juergen, 73035 Goeppingen (DE); Gern, Christian, 73249 Wernau (DE); Fischer, Uwe, 71409 Schwaikheim (DE); Lehmann, Siegfried, 73061 Ebersbach (DE); Nobis, Guenter, Dr., 73240 Wendlingen (DE)

(56) Entgegenhaltungen:
- EP-A- 0 408 877
- DE-C- 4 431 720
- DE-U- 29 521 352

## Beschreibung

### Stand der Technik

Die Erfindung geht aus von einem Verfahren zur Ermittlung der Drehzahl einer Brennkraftmaschine, mit einem Generator, der von der Brennkraftmaschine angetrieben wird, und mit einer signalverarbeitenden Anordnung, der im Oberbegriff des Anspruchs 1 definierten Gattung.

Ein derartiges Verfahren ist aus der EP 0 408 877 A2 bekannt. Danach ist zur Drehzahlermittlung einer Brennkraftmaschine, sei es ein Otto- oder auch ein Dieselmotor, die einen von ihr angetriebenen Generator enthält, ein Verfahren vorgesehen, bei dem eine signalverarbeitende Anordnung aus dem am Generator bzw. an einer Last anliegenden Signal, welches einen Signalanteil höherer und einen niedrigerer Frequenz enthält, die Drehzahl ermittelt. Dabei wird aus beiden Signalanteilen zusammen das Übersetzungsverhältnis des Antriebs zwischen Brennkraftmaschine und Generator ermittelt. Dieses Übersetzungsverhältnis geht, ebenso wie die Zylinderzahl der Brennkraftmaschine, in die Berechnung der Drehzahl aus dem höherfrequenten Signalanteil ein. Aus dem niederfrequenten Signalanteil wird durch Frequenz-Demodulation der Arbeitstakt und aus diesem bei bekannter Zylinderzahl die Drehzahl der Brennkraftmaschine ermittelt. Dieses Ergebnis wird zur Ermittlung des genannten Übersetzungsverhältnisses verwendet.

Bei diesem bekannten Verfahren werden zur Ermittlung der Drehzahl jeweils frequenzmodulierte Signalanteile der Generatorfrequenz ausgewertet. In der Praxis hat sich herausgestellt, daß dieses Verfahren insbesondere bei Dieselmotoren sehr zuverlässig arbeitet. Bei der Anwendung für Ottomotoren hat sich als nachteilig herausgestellt, daß die Modulation des niederfrequenten Signalanteils, aus dem der Arbeitszyklus der Brennkraftmaschine ermittelt wird, wesentlich schwächer ausgeprägt ist.

Weiterhin ist aus der EP-A 0 701 134 ein Verfahren zur Ermittlung der Drehzahl eines Verbrennungsmotors bekannt, bei dem die Drehzahl zum einem aus der von einem Generator erzeugten Bordnetzspannung und zum anderen in dem unteren Drehzahlbereich aus der vom Verbrennungsmotor erzeugten Schwingung oder dem von ihrem Auspuff erzeugten Geräusch ermittelt wird. Das Geräusch wird über ein Mikrophon abgenommen, welches in der Nähe des Auspuffs angebracht werden muß. Die Schwingung wird über einen Beschleunigungsmesser abgenommen, der am Motor angebracht ist. Die aus der Frequenz des akustischen Geräuschs oder der Motorschwingung festgestellten Werte und die daraus errechneten Drehzahlwerte dienen der Kalibrierung der aus der Bordnetzspannung gewonnenen Drehzahl. Es wird daraus eine Konstante ermittelt, welche das Verhältnis zwischen der Frequenz der Generatorspannung und der akustischen bzw. mechanischen Frequenz angibt. Diese Konstante dient mit der Auswertung der Generatorfrequenz der eigentlichen Drehzahlangabe. Es ist klar, daß bei diesem bekannten Verfahren durch die Notwendigkeit der Bereitstellung von akustischem oder mechanisch schwingendem Signal ein größerer Aufwand getrieben werden muß, welcher darüber hinaus in der Handhabung sehr umständlich und zeitaufwendig ist.

### Vorteile der Erfindung

Das erfindungsgemäße Verfahren zur Ermittlung der Drehzahl einer Brennkraftmaschine mit den kennzeichnenden Merkmalen des Anspruchs 1 hat demgegenüber den Vorteil, eine einfache und zuverlässige Lösung zur Verfügung zu stellen. Bei einfachster Handhabung und unter Vermeidung von großem Meßaufwand ist eine sehr zuverlässige Drehzahlangabe auch bei hohen Drehzahlen, sowohl bei Diesel- wie bei Otto-Motoren zuverlässig ermöglicht. Es bedarf lediglich des Anschlusses an die beiden Batterieanschlüsse.

Gemäß dem Verfahren nach der Erfindung wird dazu prinzipiell aus dem am Generator oder an einer Last auftretenden Signal durch Amplituden-Demodulation der Arbeitszyklus der Brennkraftmaschine ermittelt, das amplituden-demodulierte Signal wird zur weiteren Verarbeitung der signalverarbeitenden Anordnung zugeführt, und daraus wird dort der Arbeitszyklus der Brennkraftmaschine und daraus zumindest ein Maß für die Drehzahl ermittelt.

Durch die in den weiteren Ansprüchen niedergelegten Maßnahmen sind vorteilhafte Weiterbildungen und Verbesserungen des im Anspruch 1 angegebenen Verfahrens möglich.

Gegebenenfalls können die Zylinderzahl sowie die Arbeitsweise der Brennkraftmaschine berücksichtigt werden. Mit diesen Maßnahmen ist die tatsächliche Drehzahl bei sämtlichen Brennkraftmaschinen ermittelbar.

Nach einer besonders zweckmäßigen Weiterbildung der Erfindung ist vorgesehen, daß insbesondere im unteren Drehzahlbereich der Brennkraftmaschine die Ermittlung der Drehzahl mittels Amplituden-Demodulation durchgeführt wird. In diesem Bereich ist die Amplitudenmodulation der Generatorspannung ausreichend ausgeprägt und erheblich weniger störanfällig als andere Signalanteile. Diese verminderte Störanfälligkeit ist besonders im Hinblick auf die immer mehr Anwendung findende elektronische Dieselsteuerung wichtig, welche teilweise erhebliche Störsignale abgibt.

In vorteilhafter Ausgestaltung des erfindungsgemäßen Verfahrens wird aus der mittels Amplituden-Demodulation ermittelten Drehzahl und einem höherfrequenten Signalanteil, welcher der Frequenz der Restwelligkeit des Generatorsignals F_{Gen} entspricht, das Verhältnis zwischen Brennkraftmaschine und Generator bestimmt. Mit Hilfe dieses Verhältnisses wird insbesondere bei höheren und hohen Drehzahlen die Drehzahl überwiegend allein aus dem höher-frequenten Signalanteil berechnet.

In einer weiteren vorteilhaften Ausgestaltung der Erfindung ist vorgesehen, daß der mittels Amplituden-Demodulation ermittelte Wert über einen Komparator der signalverarbeitenden Anordnung zugeführt wird.

In besonders vorteilhafter und zweckmäßiger Weiterbildung der Erfindung wird die Frequenz der Restwelligkeit des Generatorsignals F_{Gen}, geführt über ein Filter und einen Komparator, mittels der signalverarbeitenden Anordnung ermittelt und in die Drehzahl gewandelt.

Entsprechend einer vorteilhaften Anordnung zur Durchführung des erfindungsgemäßen Verfahrens ist vorgesehen, daß das am Generator oder der Last auftretende Signal über einen ersten Zweig mit Filter und Komparator einer signalverarbeitenden Anordnung zugeführt wird und ebenso über einen zweiten Zweig mit einem Amplituden-Demodulator und einem Komparator, und am Ausgang der signalverarbeitenden Anordnung die ermittelte Drehzahl ansteht, welche auf einer angeschlossenen Anzeige anzeigbar ist.

Gemäß einer vorteilhaften Ausgestaltung dieser Anordnung der Erfindung enthält die signalverarbeitende Anordnung einen Mikrokontroller bzw. wird im wesentlichen durch einen solchen gebildet.

### Zeichnung

Die Erfindung ist anhand eines in der Zeichnung dargestellten Ausführungsbeispiels in der nachfolgenden Beschreibung näher erläutert. Es zeigen:
- Fig. 1: schematisch, teilweise stark hervorgehoben, die auszuwertende Generator- bzw. Batteriespannung U_{B} über der Zeit t, und
- Fig. 2: schematisch in einem Blockschaltbild den Aufbau der erfindungsgemäßen Anordnung zur Durchführung des Verfahrens gemäß der Erfindung.

### Beschreibung des Ausführungsbeispiels

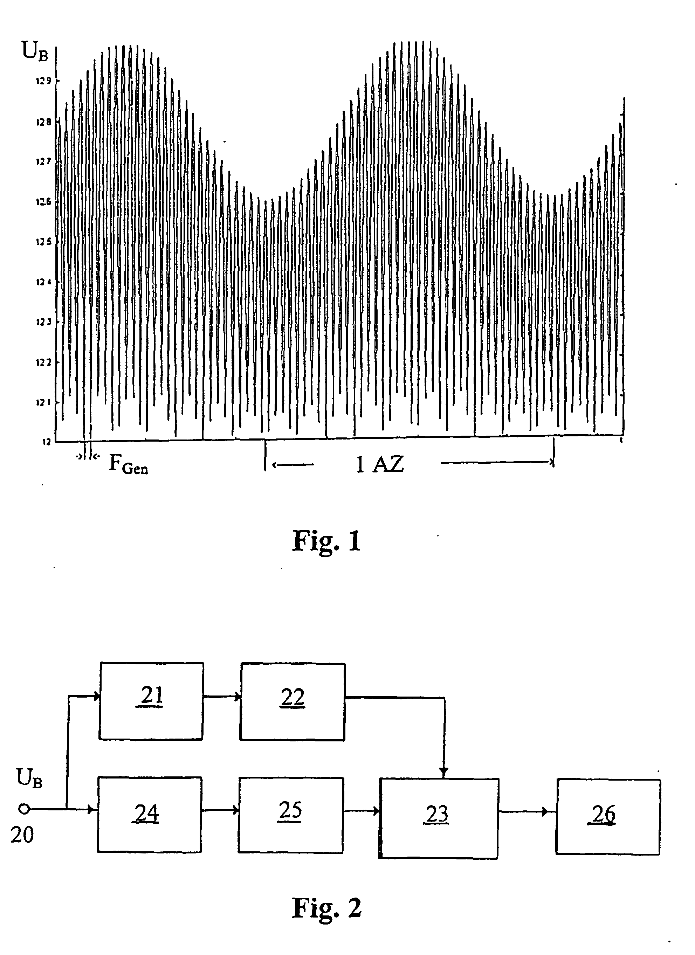

Anhand der Fig. 1 ist schematisch, teilweise stark hervorgehoben, die auszuwertende Generator- bzw. Batteriespannung U_{B} über der Zeit t dargestellt. Dabei ist nur der Wechselanteil der vom Generator erzeugten Spannung U_{B} gezeigt, der die sogenannte Generatorrestwelligkeit überlagert ist. Die Frequenz F_{Gen} stellt den höherfrequenten Signalanteil dar, in welchem die Information über die Drehzahl der Brennkraftmaschine steckt und aus dem, insbesondere bei höheren und hohen Drehzahlen, die Drehzahl ermittelt wird.

Der in Fig. 1 dargestellten frequenzmodulierten Restwelligkeit ist eine Amplitudenmodulation überlagert. Diese weist einen mit AZ bezeichneten Arbeitszyklus der Brennkraftmaschine zwischen zwei aufeinanderfolgenden Tälern auf. Der Arbeitszyklus der Brennkraftmaschine wird durch zwei aufeinanderfolgende Explosionsvorgänge hervorgerufen und ist besonders ausgeprägt im unteren Drehzahlbereich des Motors. Aus diesem Arbeitszyklus AZ ist die zugehörige Drehzahl der Brennkraftmaschine abzuleiten. Die tatsächliche Drehzahl der Brennkraftmaschine kann ermittelt werden, wenn die Zylinderanzahl sowie die Arbeitsweise (2- oder 4-Takt) bekannt ist. In der Darstellung von Fig. 1 ist die Amplitudenmodulation zur Ermittlung des Arbeitszyklus AZ der Deutlichkeit halber etwas verstärkt dargestellt.

Durch die Kenntnis der mittels Amplituden-Demodulation ermittelten Drehzahl kann das Verhältnis zwischen der Generatorrestwelligkeit F_{Gen} und der Motordrehzahl bestimmt werden. Dadurch kann nun auch die Motordrehzahl im mittleren und oberen Drehzahlbereich mit Hilfe der Generatorfrequenz F_{Gen} bestimmt werden.

In Fig. 2 ist schematisch in einem Blockschaltbild der Aufbau der erfindungsgemäßen Anordnung zur Durchführung des Verfahrens gemäß der Erfindung dargestellt. Die vom Generator einer Brennkraftmaschine erzeugte Spannung, die an eine Last wie beispielsweise die Batterie eines Kraftfahrzeuges abgegeben wird, ist mit U_{B} bezeichnet. Diese Spannung U_{B} steht am Eingang 20 an. Sie wird über einen ersten Zweig, in dem ein Filter 21 und ein Komparator 22 vorgesehen sind, einer signalverarbeitenden Anordnung 23 zugeführt. Ebenso wird die Spannung U_{B} über einen zweiten Zweig, in dem in Serie angeordnet ein Amplituden-Demodulator 24 und ein Komparator 25 vorgesehen sind, der signalverarbeitenden Anordnung 23 zugeführt. Am Ausgang der signalverarbeitenden Anordnung 23 steht die ermittelte Drehzahl an, welche z.B. in einer Anzeige 26 visuell angezeigt werden kann.

Das Filter 21 begrenzt die dem Komparator 22 zugeführten Signalanteile der Spannung U_{B} auf diejenigen Werte, welche für die Auswertung in Frage kommen und einen relevanten Beitrag leisten. Der Komparator 22 vergleicht diese vom Filter 21 gelieferten Signalwerte mit vorgegebenen oberen und unteren Grenzwerten, um das der signalverarbeitenden Anordnung 23 zugeführte Signal dieser möglichst verarbeitungsgerecht zuzuführen. Diese bestimmt daraus unter zu Hilfenahme des ermittelten Verhältnisses zwischen der Generatorrestwelligkeit F_{Gen} und der Motordrehzahl der Brennkraftmaschine deren Drehzahl, welche auf der Anzeige 26 angezeigt wird. Diese Vorgehensweise ist hauptsächlich für mittlere und höhere Drehzahlen zuständig.

Der Amplituden-Demodulator 24 demoduliert die Spannung U_{B}, um den in Fig. 1 dargestellten Arbeitszyklus AZ der Brennkraftmaschine zu ermitteln. Über den Komparator 25, der den amplituden demodulierten Wert mit vorgegebenen Vergleichswerten abgleicht, wird dafür gesorgt, daß ebenfalls nur möglichst verarbeitungsgerechte Signalanteile der signalverarbeitenden Anordnung 23 zukommen. Diese bestimmt daraus zumindest ein Maß für die Drehzahl der Brennkraftmaschine, welches auf der Anzeige 26 angezeigt wird. Wie bereits beschrieben, kann die tatsächliche Drehzahl in Kenntnis der Zylinderzahl und der Arbeitsweise der Brennkraftmaschine angezeigt werden. Gegebenenfalls ist eine entsprechende Eingabe für die signalverarbeitende Anordnung 23 erforderlich. Diese Vorgehensweise ist hauptsächlich für niedrige Drehzahlen zuständig. Andererseits wird die auf diese Weise ermittelte Drehzahl zur Bestimmung des Verhältnisses zwischen der Generatorrestwelligkeit F_{Gen} und der Motordrehzahl der Brennkraftmaschine verwendet.

Die signalverarbeitende Anordnung 23 enthält entsprechend einer bevorzugten Ausführungsform der Anordnung zur Durchführung des erfindungsgemäßen Verfahrens vorzugsweise einen Mikrokontroller bzw. wird durch einen solchen im wesentlichen gebildet. Dadurch wird mit einfachen Mitteln neben der gegebenen Verarbeitungskapazität auch eine flexible Anpassung erreicht.

Mit dem erfindungsgemäß gestalteten Verfahren ist in vorteilhafter Weise ein Verfahren zur Verfügung gestellt, das leicht am Fahrzeug adaptierbar ist. Mit seiner Hilfe kann zuverlässig sowohl bei Ottomotoren als auch bei Dieselmotoren die Drehzahl gemessen werden. Das Verfahren ist gegen Störeinflüsse auf dem Bordnetz erheblich unempfindlicher als bekannte Verfahren, so daß es auch bei Dieselfahrzeugen mit elektronischer Motorsteuerung vorteilhaft einsetzbar ist. Darüber hinaus ist eine gute Handhabbarkeit dadurch sichergestellt, daß das Gerät zur Durchführung des erfindungsgemäßen Verfahrens lediglich an die Batterieanschlüsse oder beispielsweise an einen Zigarettenanzünder angeschlossen werden muß. Dies ist für die Praxis ein ganz wesentlicher Aspekt.

## Patentansprüche

1. Verfahren zur Ermittlung der Drehzahl einer Brennkraftmaschine, die einen Generator enthält, der von der Brennkraftmaschine angetrieben wird, und wobei mit einer signalverarbeitenden Anordnung (23) aus einem am Generator oder an einer Last auftretenden Signal (U_{B}), die Drehzahl der Brennkraftmaschine ermittelt wird, **dadurch gekennzeichnet, daß** aus dem am Generator oder der Last auftretenden Signal (U_{B}) durch Amplituden-Demodulation der Arbeitszyklus(AZ) der Brennkraftmaschine in der signalverarbeitenden Anordnung (23) ermittelt und als Maß für die Drehzahl ausgegeben wird.

2. Verfahren nach Anspruch 1, **dadurch gekennzeichnet, daß** die Ermittlung der Drehzahl mittels Amplituden-Demodulation insbesondere im unteren Drehzahlbereich der Brennkraftmaschine durchgeführt wird.

3. Verfahren nach Anspruch 1 oder 2, **dadurch gekennzeichnet, daß** aus dem Signal (U_{B}) ein höherfrequentes Signal (F_{Gen}) ermittelt wird, das der Frequenz der Restwelligkeit des Signals (U_{B}) entspricht, daß die signalverarbeitende Anordnung (23) aus dem durch die Amplituden-Demodulation ermittelten Signal und dem höherfrequenten Signal (F_{Gen}) das Verhältnis zwischen beiden Signalen ermittelt und daß die Drehzahl der Brennkraftmaschine aus dem höher-frequenten Signal (F_{Gen}) anhand des ermittelten Verhältnisses bestimmt und ausgegeben wird.

4. Verfahren nach einem der vorhergehenden Ansprüche, **dadurch gekennzeichnet, daß** die Arbeitsweise (2-Takt, 4-Takt) der Brennkraftmaschine bei der Ermittlung der Drehzahl berücksichtigt wird.

5. Verfahren nach einem der vorhergehenden Ansprüche, **dadurch gekennzeichnet, daß** die Zylinderzahl der Brennkraftmaschine bei der Ermittlung der Drehzahl berücksichtigt wird.

6. Verfahren nach einem der vorhergehenden Ansprüche, **dadurch gekennzeichnet, daß** der mittels Amplituden-Demodulation ermittelte Wert über einen Komparator (25) der signalverarbeitenden Anordnung (23) zugeführt wird.

7. Verfahren nach einem der Ansprüche 3 bis 6, **dadurch gekennzeichnet, daß** die Frequenz der Restwelligkeit des Generatorsignals (F_{Gen}), geführt über ein Filter (21) und einen Komparator (22), mittels der signalverarbeitenden Anordnung (23) ermittelt und in die Drehzahl gewandelt wird.

8. Anordnung zur Durchführung nach einem der vorigen Ansprüche, **dadurch gekennzeichnet, daß** das am Generator oder der Last auftretende Signal (U_{B}) über einen ersten Zweig mit Filter (21) und Komparator (22) einer signalverarbeitenden Anordnung (23) zugeführt wird und ebenso über einen zweiten Zweig mit einem Amplituden-Demodulator (24) und einem Komparator (25), und am Ausgang der signalverarbeitenden Anordnung (23) die ermittelte Drehzahl ansteht, welche auf einer angeschlossenen Anzeige (26) anzeigbar ist.

## Claims

1. Method for determining the rotation speed of an internal combustion engine, which contains a generator which is driven by the internal combustion engine, and with the rotation speed of the internal combustion engine being determined by a signal processing arrangement (23) from a signal (U_{B}) which is produced at the generator or at a load, **characterized in that** the operating cycle (AZ) of the internal combustion engine is determined in the signal processing arrangement (23) by amplitude demodulation from the signal (U_{B}) which is produced at the generator or at the load, and is output as a measure of the rotation speed.

2. Method according to Claim 1, **characterized in that** the rotation speed is determined by means of amplitude demodulation, especially in the lower rotation speed range of the internal combustion engine.

3. Method according to Claim 1 or 2, **characterized in that** a relatively high frequency signal (F_{Gen}) which corresponds to the frequency of the residual ripple on the signal (U_{B}) is determined from the signal (U_{B}), **in that** the signal processing arrangement (23) uses the signal which is determined by the amplitude demodulation and the higher-frequency signal (F_{Gen}) to determine the ratio between these two signals, and **in that** the rotation speed of the internal combustion engine is established from the higher-frequency signal (F_{Gen}) on the basis of the determined ratio, and is output.

4. Method according to one of the preceding claims, **characterized in that** the method of operation (2 stroke, 4 stoke) of the internal combustion engine is taken into account when determining the rotation speed.

5. Method according to one of the preceding claims, **characterized in that** the number of cylinders of the internal combustion engine is taken into account when determining the rotation speed.

6. Method according to one of the preceding claims, **characterized in that** the value which is determined by means of amplitude demodulation is supplied via a comparator (25) to the signal processing arrangement (23).

7. Method according to one of Claims 3 to 6, **characterized in that** the frequency of the residual ripple on the generator signal (F_{Gen}), passed via a filter (21) and a comparator (22), is determined by means of the signal processing arrangement (23) and is converted to the rotation speed.

8. Arrangement for carrying out [lacuna] according to one of the preceding claims, **characterized in that** the signal (U_{B}) which is produced at the generator or at the load is supplied via a first path with a filter (21) and a comparator (22) to a signal processing arrangement (23), and is likewise supplied via a second path with an amplitude demodulator (24) and a comparator (25), and the determined rotation speed is produced at the output of the signal processing arrangement (23) and can be indicated or displayed on a connected indicator or display (26).

## Revendications

1. Procédé pour déterminer la vitesse de rotation d'un moteur à combustion interne équipé d'un générateur entraîné par le moteur, ainsi qu'avec un dispositif de traitement de signal (23) qui reçoit le signal (U_{B}) aux bornes du générateur ou d'une charge, pour déterminer la vitesse de rotation du moteur,
**caractérisé en ce que**
par démodulation d'amplitude du signal U_{B} apparaissant aux bornes du générateur ou de la charge, on détermine le cycle de travail (AZ) du moteur à combustion interne dans le dispositif de traitement de signal (23) et on fournit ce signal comme une mesure de la vitesse de la rotation.

2. Procédé selon la revendication 1,
**caractérisé en ce qu'**
on détermine la vitesse de rotation par démodulation d'amplitude notamment dans la plage des vitesses de rotation faibles du moteur à combustion interne.

3. Procédé selon la revendication 1 ou 2,
**caractérisé en ce qu'**
à partir du signal (U_{B}) on détermine un signal de fréquence plus élevé (F_{GEN}) qui correspond à la fréquence de modulation résiduelle du signal (U_{B}), et le dispositif de traitement de signal (23) utilise le signal obtenu par démodulation d'amplitude et le signal de fréquence élevée (F_{GEN}) pour déterminer le rapport entre les deux signaux, et
la vitesse de rotation du moteur à combustion interne est déterminée et est émise à partir du signal de fréquence élevée (F_{GEN}) en utilisant le rapport obtenu.

4. Procédé selon l'une des revendications précédentes,
**caractérisé en ce qu'**
on tient compte du mode de fonctionnement (deux temps/quatre temps) du moteur à combustion interne pour déterminer la vitesse de rotation.

5. Procédé selon l'une des revendications précédentes,
**caractérisé en ce qu'**
on tient compte du nombre de cylindres du moteur à combustion interne pour déterminer la vitesse de rotation.

6. Procédé selon l'une des revendications précédentes,
**caractérisé en ce qu'**
on applique la valeur obtenue par démodulation d'amplitude, par l'intermédiaire d'un comparateur (25) au dispositif de traitement de signal (23).

7. Procédé selon l'une des revendications 3 à 6,
**caractérisé en ce qu'**
à l'aide du dispositif de traitement de signal (23) on détermine la fréquence de l'ondulation résiduelle du signal de générateur (F_{GEN}) après passage dans un filtre (21) et un comparateur (22), et on le transforme en une vitesse de rotation.

8. Dispositif pour la mise en oeuvre du procédé selon l'une des revendications précédentes,
**caractérisé en ce que**
le signal (U_{B}) aux bornes du générateur ou de la charge est appliqué par une première branche équipée d'un filtre (21) et d'un comparateur (22) à un dispositif de traitement (23), et par une seconde branche équipée d'un démodulateur d'amplitude (24) et d'un comparateur (25) également au dispositif de traitement de signal dont la sortie fournit la vitesse de rotation obtenue, cette vitesse étant affichée sur un afficheur (26).
